# EUROPEAN PATENT SPECIFICATION

(11) **EP 3 367 023 B1**
(45) Date of publication and mention of the grant of the patent: **24.06.2020**
(21) Application number: 16856630.5
(22) Date of filing: 17.06.2016
(51) Int. Cl.: F25D 17/06, F25D 17/04, F16K 31/04

(54) **REFRIGERATOR AND AIR DUCT DEVICE THEREOF**
KÜHLSCHRANK UND LUFTKANALVORRICHTUNG DAFÜR
RÉFRIGÉRATEUR ET DISPOSITIF DE CANALISATION D'AIR ASSOCIÉ

(30) Priority: 23.10.2015 CN 201510698479
(43) Date of publication of application: 29.08.2018
(73) Proprietor: Qingdao Haier Joint Stock Co., Ltd, Qingdao, Shandong 266101 (CN)
(72) Inventor: XIA, Enpin, Qingdao Shandong 266101 (CN); ZHANG, Huimin, Qingdao Shandong 266101 (CN); ZHANG, Hao, Qingdao Shandong 266101 (CN); ZHU, Xiaobing, Qingdao Shandong 266101 (CN)
(74) Representative: dompatent von Kreisler Selting Werner - Partnerschaft von Patent- und Rechtsanwälten mbB
(86) International application number: PCT/CN2016/086181
(87) International publication number: WO 2017/067189

(56) References cited:
- CN-A- 102 297 558
- CN-A- 103 344 074
- CN-A- 103 344 074
- CN-A- 103 411 369
- CN-A- 103 411 369
- CN-A- 105 222 469
- CN-U- 204 177 017
- DE-A1-102013 212 383
- US-A- 4 920 765

## Description

### TECHNICAL FIELD

The present invention relates to a refrigerating and freezing apparatus, and in particular to a refrigerator and an air passage device thereof.

### BACKGROUND OF THE INVENTION

An evaporator of an air-cooled refrigerator is usually arranged in an independent cooling chamber, and air passages are arranged at the rear side of the article storage compartments to transport the cooling air in the cooling chamber to the article storage compartments. Air doors are arranged in the air passages to open or close the air passages or adjust the ventilation areas of the air passages to adjust the temperatures of the article storage compartments.

The air doors in the prior art are usually electric air doors, which can adjust accurately, have high controllability, but are costly, complex in structure and control, and will consume some power during use. CN 103344074 A discloses an air passage device of a refrigerator comprising an air passage cover plate arranged in front of the rear wall of a refrigerator in a tank and an air passage cover plate. The air passage cover plate is defining an air passage. The air passage device further comprises at least one air door, wherein the air door comprises a base plate part which is rotatably attached to the inner wall of the air passage cover plate and is provided with an arcuate guide hole, wherein the hole wall of the arcuate guide hole is provided with multiple limiting portions and a shielding part which extends rearwards into the air passage from an edge of the base plate and is configured to adjust the ventilation area of the air passage when being rotated along with the base plate part, wherein the inner wall of the air passage cover plate extends rearward to form at least one guide column which is inserted into the arcuate guide hole and cooperates with the arcuate guide hole by interference fit. DE 10 2013 212 383 A1 discloses an air passage device of a refrigerator comprising a base plate part which is provided with an elongate through hole parallel with the arcuate guide hole.

### SUMMARY OF THE INVENTION

One object of the present invention is to provide an air passage device without an electric door to solve one of the above defects of the prior art.

Another object of the present invention is to provide a refrigerator having the air passage device.

According to a preferred embodiment, the shielding part is an arcuate baffle plate extending rearwards from the edge of the base plate part.

According to a preferred embodiment, the air passage foam is provided with an arcuate make-way recess to allow the arcuate baffle plate to pass through.

According to a preferred embodiment, the base plate part is of a circular plate structure; and the inner wall of the air passage cover plate is provided with an annular protruding rib protruding outwards so that the base plate part can be rotatably arranged at a radial inner side of the annular protruding rib.

According to a preferred embodiment, the chord length of the arcuate baffle plate is larger than the distance between two transverse sidewalls of the air passage; and at least one transverse sidewall of the air passage is provided with an arcuate notch matched with the outer diameter of the arcuate baffle plate.

According to a preferred embodiment, there are two arcuate guide holes, and one hole wall of one arcuate guide hole is provided with multiple limiting portions; and there are two guide columns arranged at 180 degrees relative to each other.

According to a preferred embodiment, the limiting portion is a recess portion recessed from the hole wall of the arcuate guide hole and away from the arcuate guide hole.

According to the invention, the front surface of the base plate part is provided with a circular knob; and the air passage cover plate is provided with a circular make-way hole to allow the circular knob to extend out.

According to the invention, the circular knob and the base plate part are of an integral member made by an integral formation process.

In another aspect, the present invention is defined by the features of claim 8 and provides a refrigerator comprising a refrigerator inner tank, an article storage compartment defined by the refrigerator inner tank, and a cooling chamber having an evaporator arranged therein, the refrigerator being further comprising: the air passage device according to any of the above solutions, which is configured to transport cooling air from the cooling chamber to the article storage compartment via the air passage of the air passage device and adjust a flow rate of the cooling air entering the article storage compartment using the air door.

In the refrigerator and the air passage device of the present invention, an air door which can manually adjust the ventilation area of the air passage is used, so the air door does not consume power compared with an electric air door. As the air door is arranged with arcuate guide holes whose hole walls are arranged with limiting portions, the adjustment process is more accurate and reliable. By arranging the elongate through hole, when the guide column moves in the arcuate guide hole, the hole wall of the arcuate guide hole is elastically deformed, so that the arcuate guide hole can clamp the guide column tightly and changes of the air discharging area of the air passage due to displacement of the air door can be prevented.

Further, in the air passage device of the present invention, the air door has two arcuate guide holes and two guide columns, so that rotation deflection of the base plate part can be avoided. In addition, as the circular knob extends into the article storage compartment from the circular make-way recess of the air passage cover plate, the user can stretch a hand into the article storage compartment to rotate the circular knob, and the operation is very convenient. The circular knob and the base plate part are designed into an integral member, which simplifies the manufacturing and assembling processes of the air door.

Through the detailed description of the embodiments of the present invention with reference to the drawings, those skilled in the art will understand the above and other objects, advantages and features of the present invention more clearly.

### BRIEF DESCRIPTION OF THE DRAWINGS

The followings will describe some embodiments of the present invention in detail in an illustrative rather than restrictive manner with reference to the drawings. The same or similar reference signs in the drawings represent the same or similar member or part. Those skilled in the art shall understand that these drawings may not be drawn according to the scales. In the drawings,
Fig. 1 is a schematic structural view of an air passage device of a refrigerator according to an embodiment of the present invention;
Fig. 2 is schematic exploded view of the air passage device shown in Fig. 1;
Fig. 3 is a schematic structural view of an air door of the air passage device shown in Fig. 1; and
Fig. 4 is a schematic structural view of a refrigerator according to an embodiment of the present invention.

### DETAILED DESCRIPTION

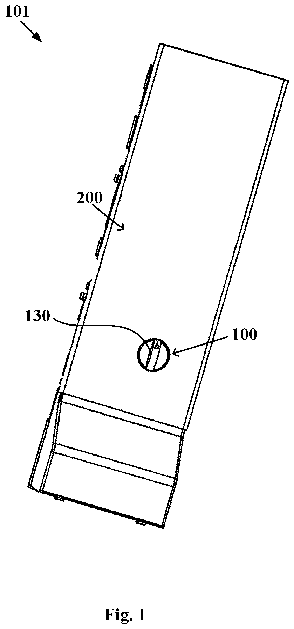

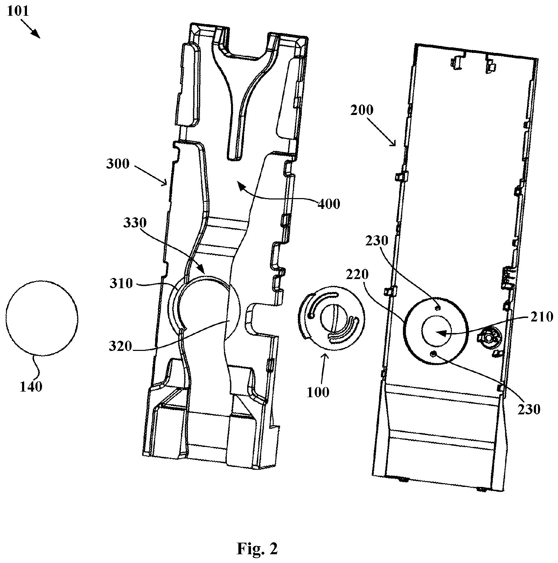

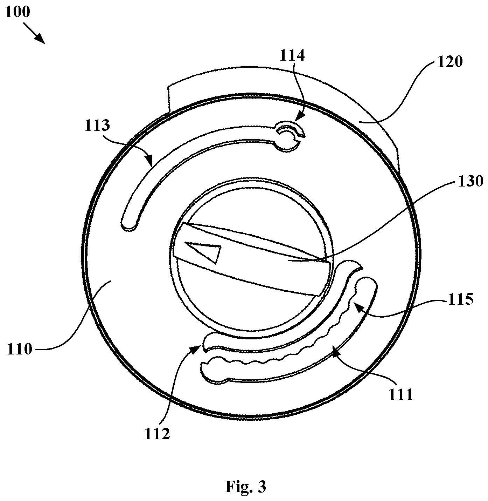

Fig. 1 is a schematic structural view of an air passage device of a refrigerator according to an embodiment of the present invention. Fig. 2 is schematic exploded view of the air passage device shown in Fig. 1. Fig. 3 is a schematic structural view of an air door of the air passage device shown in Fig. 1. For an air-cooled refrigerator, article storage compartments are defined in the refrigerator inner tank; an air passage device is arranged at the rear side of the article storage compartment; and an air passage is arranged in the air passage device for transporting cooling air to the article storage compartment. As shown in Figs. 1-3, an air passage device 101 generally may comprise an air passage cover plate 200, air passage foam 300 and at least one air door 100. The air passage cover plate 200 is arranged in front of the rear wall of the refrigerator inner tank, and is separated from the refrigerator inner tank by a certain distance. The air passage foam 300, which is arranged between the air passage cover plate 200 and the refrigerator inner tank and is a foamed layer of a hollow structure, has an air passage 400 arranged therein in a predetermined direction and having one inlet and multiple outlets. The air door 100 can adjust the flow rate of the cooling air in the air passage 400 so as to adjust the temperature in the article storage compartment.

The air door 100 includes a base plate part 110 and a shielding part 120. The base plate part 110 is rotatably attached to the inner wall of the air passage cover plate 200. The shielding part 120 extends rearwards to the air passage 400 from the edge of the base plate part 110 so as to adjust the ventilation area of the air passage 400 when being rotated along with the base plate part 110. The base plate part 110 and the shielding part 120 may be of an integral structure. After adjustment, the base plate part 110 and the shielding part 120 should be stably fixed to avoid change of the ventilation area and large fluctuations of the temperature in the article storage compartment. For this purpose, the air passage device 101 of the present invention is provided with arcuate guide holes and guide columns 230 cooperating with the guide holes.

At least one arcuate guide hole (preferably two; as shown in Fig. 3, the arcuate guide holes 111 and 113) is arranged on the base plate part 110, and the hole wall of at least a part of the arcuate guide hole (the arcuate guide hole 111, for example) is provided with multiple limiting portions 115. The base plate part 110 is further provided with an elongate through hole 112 parallel with the arcuate guide hole 111 and close to the side at which the hole wall is provided with the limiting portions 115. As shown in Fig. 3, preferably multiple limiting portions 115 are arranged on the hole wall at the side close to the center of the base plate part 110. The guide column 230 extends rearwards from the inner wall of the air passage cover plate 200, and is inserted into a corresponding arcuate guide hole 111. The guide column 230 are the arcuate guide hole 111 cooperate with each other by interference fit so that when the base plate part 110 rotates, the hole wall of the arcuate guide hole 111 close to the elongate through hole 112 (namely, the hole wall provided with the limiting portion 115) is elastically deformed to cause the guide column 230 to enter a limiting portion 115 to limit the rotation freedom of the base plate part 110. Thus, the base plate part 110 cannot rotate easily.

The extension length of the arcuate guide hole should be set such that when the guide column 230 is located at one end of the arcuate guide hole, the shielding part 120 completely opens the air passage 400, and when the guide column 230 is located at the other end of the arcuate guide hole, the shielding part 120 completely closes the air passage 400. The multiple limiting portions 115 are arranged circumferentially along the hole wall to form different adjustment shifts, so that the adjustment process will be more accurate. In addition, an elongate through hole 114 may be arranged near the end of the arcuate guide hole 113, so that when the guide column 230 moves to this end, the hole wall close to the elongate through hole 114 is elastically deformed to clamp the corresponding guide column 230 tightly. When there are two arcuate guide holes, there are also two guide columns 230 cooperating with the arcuate guide holes, and the two guide columns are arranged at 180 degrees relative to each other so that the rotation of the base plate part 110 is more stable and rotation deflection is avoided.

The limiting portion 115 may be a recess portion recessed from the hole wall of the arcuate guide hole 111 and away from the arcuate guide hole 111. The limiting portion 115 may be arranged on the two relatively longer hole walls of the arcuate guide hole 111 respectively, or only on one hole wall thereof (see Fig. 3).

In some embodiments, the shielding part 120 may be an arcuate baffle plate extending rearwards from the edge of the base plate part 110. The chord length of the arcuate baffle plate should not be smaller than the distance between two transverse sidewalls of the air passage 400, so that when the arcuate baffle plate is rotated by a certain angle(when the line connecting the two ends of the arcuate baffle plate is perpendicular to the transverse sidewalls of the air passage 400), the air passage 400 can be completely closed. Further, to achieve better sealing effect when the arcuate baffle plate completely closes the air passage 400, the chord length of the arcuate baffle plate may be larger than the distance between the two transverse sidewalls of the air passage 400. In this case, to allow the arcuate baffle plate to rotate in the air passage 400, at least one transverse sidewall of the air passage 400 is provided with an arcuate notch matched with the outer diameter of the arcuate baffle plate. For the sake of simplicity, an arcuate notch is provided to only one transverse sidewall 310, and no arcuate notch is provided to the other transverse sidewall 320, as shown in Fig. 2.

As described above, the air passage 400 is defined by the air passage foam 300, and the base plate part 110 of the air door 100 is attached to the inner wall of the air passage cover plate 200 and is located between the air passage foam 300 and the air passage cover plate 200; in other words, the base plate part 110 is located outside the air passage 400. Therefore, to allow the shielding part 120 to pass through the air passage foam 300 and enter the air passage 400, in some embodiments, the air passage foam 300 is provided with an arcuate make-way recess 330 to allow the arcuate baffle plate to pass through. To simplify the formation process, the base plate part 110 may be of a circular plate structure; and the inner wall of the air passage cover plate 200 may be provided with an annular protruding rib 220 protruding outwards so that the base plate part 110 can be rotatably arranged at a radial inner side of the annular protruding rib 220 and can be better positioned. The front surface of the base plate part 110 may be provided with a circular knob 130, and the air passage cover plate 200 may be provided with a circular make-way hole 210 to allow the circular knob 130 to extend out of the air passage 400 via the circular make-way hole 210 and to be exposed outside the article storage compartment, so that the user can manually adjust the knob. To simplify the machining process, the circular knob 130 and the base plate part 110 may be of an integral member made by an integral formation process.

In some embodiments, the air passage device 101 further comprises a cover plate 140, which is arranged at the back of the base plate part 110 and parallel with the base plate part 110 and is fixed on the air passage foam 300. The end of the arcuate baffle plate is abutted against the surface of the cover plate 140 to avoid direct contact with the air passage foam 300 and damages thereto during rotation.

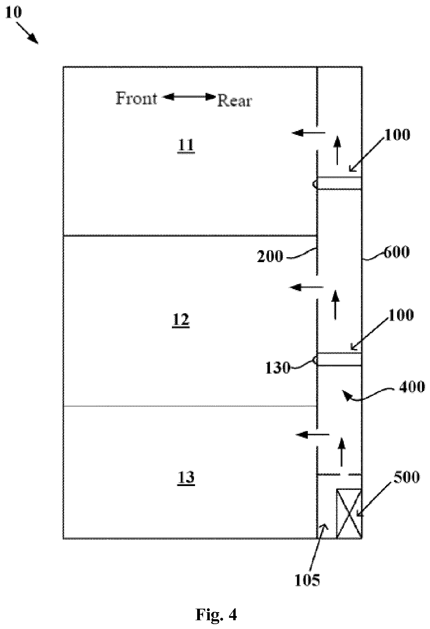

Fig. 4 is a schematic structural view of a refrigerator according to an embodiment of the present invention. Referring to Figs. 1-4, the refrigerator 10 is an air-cooled one, and comprises a refrigerator inner tank 600, article storage compartments defined by the refrigerator inner tank 600, a cooling chamber 105, an evaporator 500 arranged in the cooling chamber and the above mentioned air passage assembly 101. The air passage cover plate 200 is arranged in front of the rear wall of the refrigerator inner tank 600. The air passage foam 300 (not shown in Fig. 4) is arranged between the refrigerator inner tank 600 and the air passage cover plate 200 and defines the air passage 400. The air passage 400 communicates the respective article storage compartments with the cooling chamber 105, so that the cooling air produced by the evaporator 500 can be transported to the respective article storage compartments via the cooling chamber 105 and refrigeration can be realized.

In some embodiments, as shown in Fig. 4, the refrigerator 10 comprises three article storage compartments 11, 12, 13. Two air doors 100 may be arranged for adjusting the flow rates of the cooling air entering the article storage compartments 11, 12, respectively. The circular knob 130 of the air door 100 is exposed in the article storage compartment, so that the user can manually adjust the circular knob 130.

Those skilled in the art should realize that although the present description illustrates and describes various embodiments of the present invention, many other modifications or amendments conforming to the principle of the present invention can be determined directly or derived based on the content disclosed by the present invention without departing from the scope of the present invention as defined in the appended claims.

## Claims

1. An air passage device (101) of a refrigerator (10), comprising an air passage cover plate(200) configured to be arranged in front of a rear wall of a refrigerator inner tank (600) and air passage foam (300) configured to be arranged between a refrigerator inner tank (600) and the air passage cover plate (200), the air passage foam (300) defining an air passage (400), and the air passage device (101) being **characterized by** further comprising at least one air door (100), wherein the air door (100) comprises:
a base plate part (110) which is rotatably attached to the inner wall of the air passage cover plate (200), and is located between the air passage foam (300) and the air passage cover plate (200), and is located outside the air passage (400), and is provided with at least one arcuate guide hole (111) and an elongate through hole (112) parallel with the arcuate guide hole (111), wherein a hole wall of at least a part of the arcuate guide holes (111) is provided with multiple limiting portions (115), and the elongate through hole (112) is arranged close to the side at which the hole wall is provided with the limiting portions (115); the front surface of the base plate part (110) is provided with a circular knob (130), the circular knob (130) and the base plate part (110) are of an integral member made by an integral formation process, the air passage cover plate (200) is provided with a make-way hole (210) to allow the circular knob (130) to extend out; and
a shielding part (120) which extends rearwards into the air passage (400) from an edge of the base plate part (110) and is configured to adjust the ventilation area of the air passage (400) when being rotated along with the base plate part (110),
wherein the inner wall of the air passage cover plate (200) extends rearwards to form at least one guide column (230), which is inserted into a corresponding arcuate guide hole (111) and cooperates with the arcuate guide hole (111) by interference fit so that when the base plate part (110) rotates, the hole wall of the arcuate guide hole (111) close to the elongate through hole (112) is elastically deformed to cause the guide column (230) to enter the limiting portion (115) to limit the rotation freedom of the base plate part (110).

2. The air passage device according to claim 1, **characterized in that**: the shielding part (120) is an arcuate baffle plate extending rearwards from the edge of the base plate part (110).

3. The air passage device according to claim 2, **characterized in that**: the air passage foam (300) is provided with an arcuate make-way recess (330) to allow the arcuate baffle plate to pass through.

4. The air passage device according to claim 2, **characterized in that**: the base plate part (110) is of a circular plate structure; and
the inner wall of the air passage cover plate (200) is provided with an annular protruding rib (220) protruding outwards so that the base plate part (110) can be rotatably arranged at a radial inner side of the annular protruding rib (220).

5. The air passage device according to claim 2, **characterized in that**: the chord length of the arcuate baffle plate is larger than the distance between two transverse sidewalls (310,320) of the air passage (400); and
at least one transverse sidewall (310) of the air passage (400) is provided with an arcuate notch matched with the outer diameter of the arcuate baffle plate.

6. The air passage device according to claim 1, **characterized in that**: there are two arcuate guide holes (111,113), and one hole wall of one arcuate guide hole (111) is provided with multiple limiting portions (115); and
there are two guide columns (230) arranged at 180 degrees relative to each other.

7. The air passage device according to claim 1, **characterized in that**: the limiting portion (115) is a recess portion recessed from the hole wall of the arcuate guide hole (111) and away from the arcuate guide hole (111).

8. A refrigerator (10) comprising a refrigerator inner tank (600), an article storage compartment (11,12) defined by the refrigerator inner tank (600), a cooling chamber (105) having an evaporator (500) arranged therein, and
an air passage device (101) comprising an air passage cover plate (200) arranged in front of the rear wall of a refrigerator inner tank (600) and air passage foam (300) arranged between the refrigerator inner tank (600) and the air passage cover plate (200), the air passage foam (300) defining an air passage (400), and at least one air door (100),
the air passage device (101) is configured to transport cooling air from the cooling chamber (105) to the article storage compartment (11,12) via the air passage (400) of the air passage device (101) and adjust a flow rate of the cooling air entering the article storage compartment (11, 12) using the air door (100),
wherein the air door (100) comprises:
a base plate part (110) which is rotatably attached to the inner wall of the air passage cover plate (200), and is located between the air passage foam (300) and the air passage cover plate (200), and is located outside the air passage (400), and is provided with at least one arcuate guide hole (111) and an elongate through hole (112) parallel with the arcuate guide hole (111), wherein the hole wall of at least a part of the arcuate guide holes (111) is provided with multiple limiting portions (115), and the elongate through hole (112) is arranged close to the side at which the hole wall is provided with the limiting portions (115); the front surface of the base plate part (110) is provided with a circular knob (130), the circular knob (130) and the base plate part (110) are of an integral member made by an integral formation process, the air passage cover plate (200) is provided with a make-way hole (210) to allow the circular knob (130) to extend out and to be exposed outside the article storage compartment (11,12); and
a shielding part (120) which extends rearwards into the air passage (400) from an edge of the base plate part (110) and is configured to adjust the ventilation area of the air passage (400) when being rotated along with the base plate part (110),
wherein the inner wall of the air passage cover plate (200) extends rearwards to form at least one guide column (230), which is inserted into a corresponding arcuate guide hole (111) and cooperates with the arcuate guide hole (111) by interference fit so that when the base plate part (110) rotates, the hole wall of the arcuate guide hole (111) close to the elongate through hole (112) is elastically deformed to cause the guide column (230) to enter the limiting portion (115) to limit the rotation freedom of the base plate part (110).

9. The refrigerator according to claim 8, wherein the shielding part (120) is an arcuate baffle plate extending rearwards from the edge of the base plate part (110).

10. The refrigerator according to claim 9, wherein the air passage foam (300) is provided with an arcuate make-way recess (330) to allow the arcuate baffle plate to pass through.

11. The refrigerator according to claim 9, wherein the base plate part (110) is of a circular plate structure; and
the inner wall of the air passage cover plate (200) is provided with an annular protruding rib (220) protruding outwards so that the base plate part (110) can be rotatably arranged at a radial inner side of the annular protruding rib (220).

12. The refrigerator according to claim 9, wherein the chord length of the arcuate baffle plate is larger than the distance between two transverse sidewalls (310, 320) of the air passage (400); and
at least one transverse sidewall (310) of the air passage (400) is provided with an arcuate notch matched with the outer diameter of the arcuate baffle plate.

13. The refrigerator according to claim 8, wherein there are two arcuate guide holes (111, 113), and one hole wall of one arcuate guide hole (111) is provided with multiple limiting portions (115); and
there are two guide columns (230) arranged at 180 degrees relative to each other.

## Patentansprüche

1. Luftdurchlassvorrichtung (101) eines Kühlschranks (10) mit einer Luftdurchlassabdeckplatte (200), die vor der Rückwand eines Kühlschrankinnentanks (600) angeordnet ist, und einem Luftdurchlassschaumstoff (300), der zwischen dem Kühlschrankinnentank (600) und der Luftdurchlassabdeckplatte (200) angeordnet ist, wobei der Luftdurchlassschaumstoff (300) einen Luftdurchlass (400) definiert, und wobei die Luftdurchlassvorrichtung (101) **dadurch gekennzeichnet ist, dass** sie ferner mindestens eine Lufttür (100) aufweist, wobei die Lufttür (100) aufweist:
ein Basisplattenteil (110), das drehbar an der Innenwand der Luftdurchlassabdeckplatte (200) angebracht ist, sich zwischen dem Luftdurchlassschaumstoff (300) und der Luftdurchlassabdeckplatte (200) befindet, sich außerhalb des Luftdurchlasses (400) befindet und mit mindestens einem bogenförmigen Führungsloch (111) und einem länglichen Durchgangsloch (112) parallel zu dem bogenförmigen Führungsloch (111) versehen ist, wobei eine Lochwand von mindestens einem Teil der bogenförmigen Führungslöcher (111) mit mehreren Begrenzungsabschnitten (115) versehen ist, und wobei das längliche Durchgangsloch (112) in der Nähe der Seite angeordnet ist, an der die Lochwand mit den Begrenzungsabschnitten (115) versehen ist; wobei die Vorderfläche des Basisplattenteils (110) mit einem runden Drehknopf (130) versehen ist, wobei der runde Drehknopf (130) und das Basisplattenteil (110) aus einem integralen Element bestehen, das durch einen integralen Formgebungsprozess hergestellt ist, wobei die Luftdurchlassabdeckplatte (200) mit einem Durchquerungsloch (210) versehen ist, um dem runden Drehknopf (130) zu ermöglichen, sich nach außen zu erstrecken; und
ein Abschirmteil (120), das sich rückwärtig von einer Kante des Basisplattenteils (110) in den Luftdurchlass (400) erstreckt und zum Einstellen des Lüftungsbereichs des Luftdurchlasses (400) ausgebildet ist, wenn es zusammen mit dem Basisplattenteil (110) gedreht wird,
wobei sich die Innenwand der Luftdurchlassabdeckplatte (200) rückwärtig erstreckt, um mindestens eine Führungssäule (230) zu bilden, die in ein entsprechendes bogenförmigen Führungsloch (111) eingesetzt ist und durch eine Presspassung mit dem bogenförmigen Führungsloch (111) zusammenwirkt, so dass sich die Lochwand des bogenförmigen Führungslochs (111) in der Nähe des länglichen Durchgangslochs (112) beim Drehen des Basisplattenteils (110) elastisch verformt, damit die Führungssäule (230) in den Begrenzungsabschnitt (115) eintreten kann, um die Rotationsfreiheit des Basisplattenteils (110) zu begrenzen.

2. Luftdurchlassvorrichtung nach Anspruch 1, **dadurch gekennzeichnet, dass** das Abschirmteil (120) eine bogenförmige Prallplatte ist, die sich von der Kante des Basisplattenteils (110) rückwärtig erstreckt.

3. Luftdurchlassvorrichtung nach Anspruch 2, **dadurch gekennzeichnet, dass** der Luftdurchlassschaumstoff (300) mit einer bogenförmigen Durchquerungsaussparung (330) versehen ist, um der bogenförmigen Prallplatte ein Durchqueren zu ermöglichen.

4. Luftdurchlassvorrichtung nach Anspruch 2, **dadurch gekennzeichnet, dass** das Basisplattenteil (110) eine runde Plattenstruktur aufweist; und
die Innenwand der Luftdurchlassabdeckplatte (200) mit einer ringförmigen hervorstehenden Rippe (220) versehen ist, die nach außen hervorsteht, so dass das Basisplattenteil (110) an einer radialen Innenseite der ringförmigen hervorstehenden Rippe (220) drehbar angeordnet sein kann.

5. Luftdurchlassvorrichtung nach Anspruch 2, **dadurch gekennzeichnet, dass** die Sehnenlänge der bogenförmigen Prallplatte größer ist als der Abstand zwischen zwei Quer-Seitenwänden (310, 320) des Luftdurchlasses (400); und mindestens eine Quer-Seitenwand (310) des Luftdurchlasses (400) mit einer bogenförmigen Kerbe versehen ist, die mit dem Außendurchmesser der bogenförmigen Prallplatte zusammenpasst.

6. Luftdurchlassvorrichtung nach Anspruch 1, **dadurch gekennzeichnet, dass** zwei bogenförmige Führungslöcher (111, 113) vorliegen und eine Lochwand eines bogenförmigen Führungslochs (111) mit mehreren Begrenzungsabschnitten (115) versehen ist; und zwei Führungssäulen (230) vorliegen, die in einem Winkel von 180 Grad relativ zueinander angeordnet sind.

7. Luftdurchlassvorrichtung nach Anspruch 1, **dadurch gekennzeichnet, dass** der Begrenzungsabschnitt (115) ein Aussparungsabschnitt ist, der von der Lochwand des bogenförmigen Führungslochs (111) und weg von dem bogenförmigen Führungsloch (111) ausgespart ist.

8. Kühlschrank (10) mit einem Kühlschrankinnentank (600), einem Artikellagerfach (11, 12), das von dem Kühlschrankinnentank (600) definiert wird, einer Kühlkammer (105) mit einem darin angeordneten Verdampfer (500) und einer Luftdurchlassvorrichtung (101) mit einer Luftdurchlassabdeckplatte (200), die vor der Rückwand des Kühlschrankinnentanks (600) angeordnet ist, und einem Luftdurchlassschaumstoff (300), der zwischen dem Kühlschrankinnentank (600) und der Luftdurchlassabdeckplatte (200) angeordnet ist, wobei der Luftdurchlassschaumstoff (300) einen Luftdurchlass (400) definiert, und mit mindestens einer Lufttür (100),
wobei die Luftdurchlassvorrichtung (101) dazu ausgebildet ist, Kühlluft von der Kühlkammer (105) zu dem Artikellagerfach (11, 12) über den Luftdurchlass (400) der Luftdurchlassvorrichtung (101) zu transportieren und einen Durchfluss der in das Artikellagerfach (11, 12) eintretenden Kühlluft mittels der Lufttür (100) einzustellen,
wobei die Lufttür (100) aufweist:
ein Basisplattenteil (110), das drehbar an der Innenwand der Luftdurchlassabdeckplatte (200) angebracht ist, sich zwischen dem Luftdurchlassschaumstoff (300) und der Luftdurchlassabdeckplatte (200) befindet, sich außerhalb des Luftdurchlasses (400) befindet und mit mindestens einem bogenförmigen Führungsloch (111) und einem länglichen Durchgangsloch (112) parallel zu dem bogenförmigen Führungsloch (111) versehen ist, wobei die Lochwand von mindestens einem Teil der bogenförmigen Führungslöcher (111) mit mehreren Begrenzungsabschnitten (115) versehen ist, und wobei das längliche Durchgangsloch (112) in der Nähe der Seite angeordnet ist, an der die Lochwand mit den Begrenzungsabschnitten (115) versehen ist; wobei die Vorderfläche des Basisplattenteils (110) mit einem runden Drehknopf (130) versehen ist, wobei der runde Drehknopf (130) und das Basisplattenteil (110) aus einem integralen Element bestehen, das durch einen integralen Formgebungsprozess hergestellt ist, wobei die Luftdurchlassabdeckplatte (200) mit einem Durchquerungsloch (210) versehen ist, um dem runden Drehknopf (130) zu ermöglichen, sich nach außen zu erstrecken und außerhalb des Artikellagerfachs (11, 12) freigelegt zu sein; und
ein Abschirmteil (120), das sich rückwärtig von einer Kante des Basisplattenteils (110) in den Luftdurchlass (400) erstreckt und zum Einstellen des Lüftungsbereichs des Luftdurchlasses (400) ausgebildet ist, wenn es zusammen mit dem Basisplattenteil (110) gedreht wird, wobei sich die Innenwand der Luftdurchlassabdeckplatte (200) rückwärtig erstreckt, um mindestens eine Führungssäule (230) zu bilden, die in ein entsprechendes bogenförmigen Führungsloch (111) eingesetzt ist und durch eine Presspassung mit dem bogenförmigen Führungsloch (111) zusammenwirkt, so dass sich die Lochwand des bogenförmigen Führungslochs (111) in der Nähe des länglichen Durchgangslochs (112) beim Drehen des Basisplattenteil (110) elastisch verformt, damit die Führungssäule (230) in den Begrenzungsabschnitt (115) eintreten kann, um die Rotationsfreiheit des Basisplattenteils (110) zu begrenzen.

9. Kühlschrank nach Anspruch 8, wobei das Abschirmteil (120) eine bogenförmige Prallplatte ist, die sich rückwärtig von der Kante des Basisplattenteils (110) erstreckt.

10. Kühlschrank nach Anspruch 9, wobei der Luftdurchlassschaumstoff (300) mit einer bogenförmigen Durchquerungsaussparung (330) versehen ist, um der bogenförmigen Prallplatte ein Durchqueren zu ermöglichen.

11. Kühlschrank nach Anspruch 9, wobei das Basisplattenteil (110) eine runde Plattenstruktur aufweist; und die Innenwand der Luftdurchlassabdeckplatte (200) mit einer ringförmigen hervorstehenden Rippe (220) versehen ist, die sich nach außen erstreckt, so dass das Basisplattenteil (110) an einer radialen Innenseite der ringförmigen hervorstehenden Rippe (220) drehbar angeordnet sein kann.

12. Kühlschrank nach Anspruch 9, wobei die Sehnenlänge der bogenförmigen Prallplatte größer ist als der Abstand zwischen zwei Quer-Seitenwänden (310, 320) des Luftdurchlasses (400); und mindestens eine Quer-Seitenwand (310) des Luftdurchlasses (400) mit einer bogenförmigen Kerbe versehen ist, die mit dem Außendurchmesser der bogenförmigen Prallplatte zusammenpasst.

13. Kühlschrank nach Anspruch 8, wobei zwei bogenförmige Führungslöcher (111, 113) vorliegen und eine Lochwand eines bogenförmigen Führungslochs (111) mit mehreren Begrenzungsabschnitten (115) versehen ist; und zwei Führungssäulen (230) vorliegen, die in einem Winkel von 180 Grad relativ zueinander angeordnet sind.

## Revendications

1. Dispositif de passage d'air (101) d'un réfrigérateur (10), comprenant une plaque couvrante de passage d'air (200) configurée pour être agencée devant une paroi arrière d'une cuve intérieure de réfrigérateur (600) et une mousse de passage d'air (300) configurée pour être agencée entre une cuve intérieure de réfrigérateur (600) et la plaque couvrante de passage d'air (200), la mousse de passage d'air (300) définissant un passage d'air (400), et le dispositif de passage d'air (101) étant **caractérisé en ce qu'**il comprend en outre au moins une trappe d'aération (100), dans lequel la trappe d'aération (100) comprend :
une partie de plaque de base (110) qui est fixée en rotation à la paroi intérieure de la plaque couvrante de passage d'air (200), et est située entre la mousse de passage d'air (300) et la plaque couvrante de passage d'air (200), et est située à l'extérieur du passage d'air (400), et est pourvue d'au moins un trou de guidage arqué (111) et d'un trou traversant allongé (112) parallèle au trou de guidage arqué (111), dans lequel une paroi de trou d'au moins une partie des trous de guidage arqués (111) est pourvue de multiples portions de limitation (115), et le trou traversant allongé (112) est agencé près du côté au niveau duquel la paroi de trou est pourvue des portions de limitation (115) ; la surface avant de la partie de plaque de base (110) est pourvue d'un bouton circulaire (130), le bouton circulaire (130) et la partie de plaque de base (110) sont un organe d'une seule pièce réalisé par un processus de formation d'une seule pièce, la plaque couvrante de passage d'air (200) est pourvue d'un trou d'ouverture de voie (210) pour permettre au bouton circulaire (130) de s'étendre extérieurement ; et
une partie de protection (120) qui s'étend vers l'arrière dans le passage d'air (400) depuis un bord de la partie de plaque de base (110) et est configurée pour régler la zone de ventilation du passage d'air (400) lorsqu'elle est mise en rotation avec la partie de plaque de base (110),
dans lequel la paroi intérieure de la plaque couvrante de passage d'air (200) s'étend vers l'arrière pour former au moins une colonne de guidage (230), qui est insérée dans un trou de guidage arqué (111) correspondant et coopère avec le trou de guidage arqué (111) par ajustement serré de sorte que lorsque la partie de plaque de base (110) entre en rotation, la paroi de trou du trou de guidage arqué (111) près du trou traversant allongé (112) est déformée élastiquement pour amener la colonne de guidage (230) à entrer dans la portion de limitation (115) pour limiter la liberté de rotation de la partie de plaque de base (110).

2. Dispositif de passage d'air selon la revendication 1, **caractérisé en ce que** : la partie de protection (120) est une chicane arquée s'étendant vers l'arrière depuis le bord de la partie de plaque de base (110).

3. Dispositif de passage d'air selon la revendication 2, **caractérisé en ce que** : la mousse de passage d'air (300) est pourvue d'un évidement d'ouverture de voie arqué (330) pour permettre à la chicane arquée de passer au travers.

4. Dispositif de passage d'air selon la revendication 2, **caractérisé en ce que** : la partie de plaque de base (110) est une structure de plaque circulaire ; et
la paroi intérieure de la plaque couvrante de passage d'air (200) est pourvue d'une nervure saillante annulaire (220) faisant saillie vers l'extérieur de sorte que la partie de plaque de base (110) peut être agencée en rotation au niveau d'un côté intérieur radial de la nervure saillante annulaire (220).

5. Dispositif de passage d'air selon la revendication 2, **caractérisé en ce que** : la longueur de corde de la chicane arquée est plus grande que la distance entre deux parois latérales transversales (310, 320) du passage d'air (400) ; et
au moins une paroi latérale transversale (310) du passage d'air (400) est pourvue d'une encoche arquée concordant avec le diamètre extérieur de la chicane arquée.

6. Dispositif de passage d'air selon la revendication 1, **caractérisé en ce que** : il y a deux trous de guidage arqués (111, 113), et une paroi de trou d'un trou de guidage arqué (111) est pourvue de multiples portions de limitation (115) ; et
il y a deux colonnes de guidage (230) agencées à 180 degrés l'une par rapport à l'autre.

7. Dispositif de passage d'air selon la revendication 1, **caractérisé en ce que** : la portion de limitation (115) est une portion d'évidement en retrait de la paroi de trou du trou de guidage arqué (111) et éloignée du trou de guidage arqué (111).

8. Réfrigérateur (10) comprenant une cuve intérieure de réfrigérateur (600), un compartiment de stockage d'articles (11, 12) défini par la cuve intérieure de réfrigérateur (600), une chambre de refroidissement (105) ayant un évaporateur (500) agencé à l'intérieur, et
un dispositif de passage d'air (101) comprenant une plaque couvrante de passage d'air (200) agencée devant la paroi arrière d'une cuve intérieure de réfrigérateur (600) et une mousse de passage d'air (300) agencée entre la cuve intérieure de réfrigérateur (600) et la plaque couvrante de passage d'air (200), la mousse de passage d'air (300) définissant un passage d'air (400), et au moins une trappe d'aération (100),
le dispositif de passage d'air (101) est configuré pour transporter de l'air de refroidissement de la chambre de refroidissement (105) au compartiment de stockage d'articles (11, 12) via le passage d'air (400) du dispositif de passage d'air (101) et régler un débit de l'air de refroidissement entrant dans le compartiment de stockage d'articles (11, 12) à l'aide de la trappe d'aération (100),
dans lequel la trappe d'aération (100) comprend :
une partie de plaque de base (110) qui est fixée en rotation à la paroi intérieure de la plaque couvrante de passage d'air (200), et est située entre la mousse de passage d'air (300) et la plaque couvrante de passage d'air (200), et est située à l'extérieur du passage d'air (400), et est pourvue d'au moins un trou de guidage arqué (111) et d'un trou traversant allongé (112) parallèle au trou de guidage arqué (111), dans lequel la paroi de trou d'au moins une partie des trous de guidage arqués (111) est pourvue de multiples portions de limitation (115), et le trou traversant allongé (112) est agencé près du côté au niveau duquel la paroi de trou est pourvue des portions de limitation (115) ; la surface avant de la partie de plaque de base (110) est pourvue d'un bouton circulaire (130), le bouton circulaire (130) et la partie de plaque de base (110) sont un organe d'une seule pièce réalisée par un processus de formation d'une seule pièce, la plaque couvrante de passage d'air (200) est pourvue d'un trou d'ouverture de voie (210) pour permettre au bouton circulaire (130) de s'étendre extérieurement et d'être exposé à l'extérieur du compartiment de stockage d'articles (11, 12) ; et
une partie de protection (120) qui s'étend vers l'arrière dans le passage d'air (400) depuis un bord de la partie de plaque de base (110) et est configurée pour régler la zone de ventilation du passage d'air (400) lorsqu'elle est mise en rotation avec la partie de plaque de base (110),
dans lequel la paroi intérieure de la plaque couvrante de passage d'air (200) s'étend vers l'arrière pour former au moins une colonne de guidage (230), qui est insérée dans un trou de guidage arqué (111) correspondant et coopère avec le trou de guidage arqué (111) par ajustement serré de sorte que lorsque la partie de plaque de base (110) entre en rotation, la paroi de trou du trou de guidage arqué (111) près du trou traversant allongé (112) est déformée élastiquement pour amener la colonne de guidage (230) à entrer dans la portion de limitation (115) pour limiter la liberté de rotation de la partie de plaque de base (110).

9. Réfrigérateur selon la revendication 8, dans lequel la partie de protection (120) est une chicane arquée s'étendant vers l'arrière depuis le bord de la partie de plaque de base (110).

10. Réfrigérateur selon la revendication 9, dans lequel la mousse de passage d'air (300) est pourvue d'un évidement d'ouverture de voie arqué (330) pour permettre à la chicane arquée de passer au travers.

11. Réfrigérateur selon la revendication 9, dans lequel la partie de plaque de base (110) est une structure de plaque circulaire ; et
la paroi intérieure de la plaque couvrante de passage d'air (200) est pourvue d'une nervure saillante annulaire (220) faisant saillie vers l'extérieur de sorte que la partie de plaque de base (110) peut être agencée en rotation au niveau d'un côté intérieur radial de la nervure saillante annulaire (220).

12. Réfrigérateur selon la revendication 9, dans lequel la longueur de corde de la chicane arquée est plus grande que la distance entre deux parois latérales transversales (310, 320) du passage d'air (400) ; et
au moins une paroi latérale transversale (310) du passage d'air (400) est pourvue d'une encoche arquée concordant avec le diamètre extérieur de la chicane arquée.

13. Réfrigérateur selon la revendication 8, dans lequel il y a deux trous de guidage arqués (111, 113), et une paroi de trou d'un trou de guidage arqué (111) est pourvue de multiples portions de limitation (115) ; et
il y a deux colonnes de guidage (230) agencées à 180 degrés l'une par rapport à l'autre.
